(19) Europäisches Patentamt
European Patent Office
Office européen des brevets

(11) Publication number: **0 230 676 A2**

(12) **EUROPEAN PATENT APPLICATION**

(21) Application number: **86118174.1**

(51) Int. Cl.4: **H04Q 11/04**, H04L 11/20

(22) Date of filing: **31.12.86**

(30) Priority: **31.01.86 JP 17927/86**

(43) Date of publication of application: **05.08.87 Bulletin 87/32**

(84) Designated Contracting States: **DE FR GB**

(71) Applicant: **HITACHI, LTD.**
**6, Kanda Surugadai 4-chome Chiyoda-ku**
**Tokyo 100(JP)**

(72) Inventor: **Kuwahara, Hiroshi**
**3-25-23, Tsuda-machi**
**Kodaira-shi Tokyo(JP)**
Inventor: **Shirasu, Hirotoshi**
**2-25-5, Hiyoshi Kouhoku-ku**
**Yokohama-shi Kanagawa-ken(JP)**
Inventor: **Suzuki, Taihei**
**Suzuki Shinden Shataku B2-1 1473, Josuihoncho**
**Kodaira-shi Tokyo(JP)**
Inventor: **Amada, Eiichi**
**Suzuki Shinden Shataku B6-5 1473, Josuihoncho**
**Kodaira-shi Tokyo(JP)**
Inventor: **Morita, Takashi**
**122, Maioka-cho Totsuka-ku**
**Yokohama-shi Kanagawa-ken(JP)**

(74) Representative: **Altenburg, Udo, Dipl.-Phys. et al**
**Patent- und Rechtsanwälte**
**Bardehle-Pagenberg-Dost-Altenburg-Frohwitter & Partner Postfach 86 06 20**
**D-8000 München 86(DE)**

(54) **Integrated switch.**

(57) A circuit/packet integrated switching system which can easily cope with the change in the service areas of the subscribers or the change in the traffic amounts of circuit/packet switching. For this purpose, a time slot for circuit switching and a time slot for packet switching are provided on a speech path highway in the subscriber line interface module that contains the subscriber interface circuit. At the time of calling, the subscriber speech path is connected to either one of said two kinds of time slots according to the circuit switching service or the packet switching service requested by the subscriber.

FIG. 1

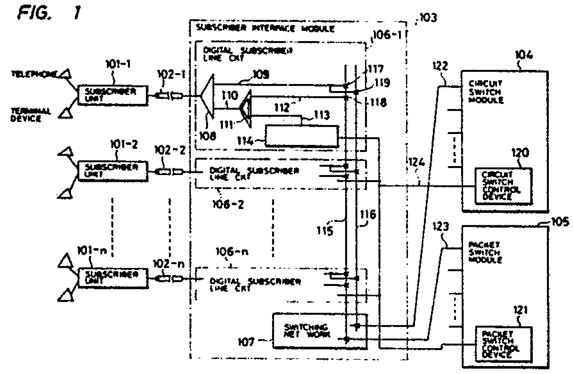


EP 0 230 676 A2

# INTEGRATED SWITCH

## BACKGROUND OF THE INVENTION

### Field of the Invention:

The present invention relates to a circuit/packet integrated switch, and more specifically to the structure of an integrated switch having a digital subscriber circuit which designates the circuit switching or the packet switching call by call when multiplex signals consisting of packet information such as data and circuit switch Information such as voice signals and data are sent from a subscriber's telephone to be connected to the circuit switch and to the packet switch for telephone exchange.

### Description of the Prior Art:

A switch consisting of a circuit switch and a packet switch in combination has been proposed in Japanese Patent Laid-Open No. 105344/1985, according to which a main distribution frame has a switching function to connect the subscriber line to the circuit switching part or to the packet switching part call by call according to the service request.

In the above integrated switch, however, the connection switching device provided in the main distribution frame must be changed or the connecting cables must be changed between the main distribution frame and the individual switching parts every time when the service areas of the subscribers are to be changed, lacking flexibility in constituting the system.

Further, the number of connecting cables is doubled between the main distribution frame and the switching unit.

Another means for realizing the integrated switching system consists of installing a packet switching part shown in Fig. 3 in the subsequent stage of the circuit switching part, and setting a path to connect a subscriber to the packet switching unit via the circuit switching part every time when the subscriber requests the service for packet switching. According to this switching system, the packet switching service utilizes hardware resources of both the circuit switching part and the packet switching part. Therefore, if the traffic of packet switching service increases, the scale of the circuit switching part increases and the cost of hardware of the switch increases.

## SUMMARY OF THE INVENTION

The object of the present invention is to provide a system architecture which imparts flexibility so that the circuit/packet integrated switch can be easily corresponded to the change in the service areas of subscribers and to the change in the traffic amount of the circuit switch and packet switch, and which can also be constituted economically.

In order to achieve the above object according to the present invention, a time slot for circuit switch and a time slot for packet switch are provided on a path highway in the subscriber line interface module that accommodates the subscriber line interface circuit, and the subscriber path is connected to either one of the two time slots according to the circuit switching service or the packet switching service from the call originating subscriber, thereby to realize an integrated switch. In the switching system of the present invention, the subscriber is connected to the packet switching unit without passing through the path switches for circuits switching during the packet switching service. Therefore the path switch for circuit switching is not wastefully used and the economical advantage is not impaired. The subscriber interface circuit and the subscriber interface module can be used for both the circuit switching and packet switching, and the number of time slots for these switchings can be changed by a semi-fixed switch in the module that will be described later to increase the degree of flexibility.

The above-mentioned and other features and objects of the present invention will become more apparent by reference to the following description taken in conjunction with the accompanying drawings.

## BRIEF DESCRIPTION OF THE DRAWINGS

Fig. 1 is a diagram illustrating the structure of an integrated switching system according to an embodiment of the present invention;

Fig. 2 is a time chart of the packet switching procedure for illustrating the operation of the embodiment of Fig. 1;

Fig. 3 is a diagram illustrating the structure of an integrated switching system that has been proposed thus far; and

Figs. 4, 5, 6 and 7 are block diagrams illustrating the structures of integrated switching systems according to other embodiments of the present invention.

## DESCRIPTION OF THE PREFERRED EMBODIMENTS

Fig. 1 is a diagram illustrating the structure of an integrated switching system according to an embodiment of the present invention.

In Fig. 1, subscriber units 110-1 101-2, ....., 101-n for digital subscriber lines are accommodated in digital subscriber line circuits 106-1, 106-2 ....., 106-n in a subscriber interface module 103 of an integrated switch via subscriber lines 102-1, 102-2, ....., 102-n. As has been stipulated in the I-interface standards recommended by the International Telegraph and Telephone Consultative Committee (CCITT), the digital subscriber lines effects time division multiplexing transmission of a plurlaity of channels and each channel is allowed to designate the circuit switching service or the packet switching service call by call.

If the above I-interface standareds are followed, these channels comprise two B channels (64 kb/s, the circuit switching or the packet switching can be designated by the communication information of the user) and a D channel (16 kb/s, call setting signal Ds or user packet information Dp is formed by the packetized signalling information). The following description deals with the case where the I-interface is followed.

The subscriber line interface module 103 is connected to a circuit switch module 104 via a path highway 122 and is connected to a packet switch module 105 via a path highway 123. The subscriber line interface module 103 contains a plurality of digital subscriber line circuits 106, and the input/output terminals to the switching network in the switch of the digital subscriber line circuits are connected to the path highway 122 in the subscriber line interface module 103. The path highway 122 is divided into a time slot highway 115 for packet switching and a time slot highway 116 for circuit switching. The two highways may have been physically separated from each other, or a plurality of time slots of the same highway or of a plurality of highways may be logically isolated at a ratio that meets the traffic amounts of packet switching and circuit switching. These highways are connected to speech path highways 122 and 123 that go to said switch modules via a time division switch 107 in the subscriber line interface module 103. The time division switch 107 may set the time slot call by call. To save the processing ability of the switch, the highways may be connected in a fixed manner according to the time slots for packet/circuit switching, and the connection may be changed only when the traffic conditions are changed.

Described below is the internal structure of the digital subscriber line circuit 106. A multiplex/demultiplex circuit 108 effects the multiplexing and demultiplexing of B channels and D channel that are multiplexed on the digital subscriber line. The input signals from the digital subscriber line 102 are separated by the multiplex/demultiplex circuit 108, and the B channels are produced onto the line 109. The packet switching service that is requested is connected by a switch 117 to the packet switching time slot, and the circuit switching is connected by a switch 119 to the time slot circuit switching. Further, the D channel is produced onto the line 110, and is divided into a signal packet and a user packet by a packet multiplex/demultiplex circuit 111. The signal packet is produced onto a signal line 113 and the user packet is produced onto a path line 112. The user packet is further connected by a switch 118 to a time slot for switching the packet.

The signal packet is interpreted by a terminal interface control circuit 114 to be call control information and is transmitted, as required, to a circuit switch controller 120 and a packet switch controller 121 via a controller connection bus 124. The controller connection bus 124 may be physically separated from the speech path highway 122 or 123 or may be multiplexed on the speech path highways 122, 123 and may be logically distinguished from the speech path signals.

The flow of signals from the switch side to the terminal side will be easily implied from the above description and is not described here.

Operation of the integrated switch of the structure of Fig. 1 will now be described in conjunction with Fig. 2 in the case when the packet switching service is requested. The operation in case of the circuit switching service being requested will be easily implied from the conventional circuit switching technology and the operation in case of the packet being switched, and is not described here. Fig. 2 shows one of the call control systems. Further, it needs not be pointed out here that Fig. 2 shows principal flows of signals only and does not show minor flows.

If now a subscriber requests to switch the packet through the B channel, this request is transmitted as a call control signal packet (201) from the subscriber unit 101 for digital subscriber line to the digital subscriber line circuit 106 via D channel. The call control signal packet is separated by multiplex/demultiplex circuits 108 and 111 in the digital subscriber line circuit 106, received by the terminal interface control circuit 114, and is interpreted. As it is detected that a packet call of the B channel is originated the terminal interface control circuit 114 informs the circuit switch controller 120 of it (202). The circuit switch controller 120 checks the attribute of the subscriber terminal, checks the vacancy of time slots of speech path highway between the digital subscriber line circuit 106 and the packet switch module 105, and informs the packet switch controller 121 of the calling (203) when it is so determined that the calling can be properly processed. The packet switch controller 121 checks the internal condition of the packet switch module 105, and returns the response (204) to the circuit switch controller 120 if it is so determined that the requested packet calling can be processed. Upon receipt of the response, the circuit switch controller 120 returns the acceptance of packet call that is requested and the response - (205) for designating the packet switch time slot used for the connection between 106 and 105, back to the terminal interface control circuit 114 in the digital subscriber line circuit 106. The digital subscriber line circuit 106 controls the switch 117 to connect the designated time slot, and returns the response (206) to the subscriber until 101 for digital subscriber line such that the switch will receive the call. The unit 101 sends a connection request packet (207) to the module 105 by B channel through the speech path connected to the packet switch module 105. Upon receipt of the packet, the packet switch controller 121 knows the terminating terminal and requests the circuit switch controller 120 to set the speech path up to the terminating terminal (208). In response to this request, the circuit switch controller 120 drives the digital subscriber line circuit 106 which contains the terminating terminal, informs of the receipt of packet call, and specifies a time slot (209) that will be used for setting the speech path. The digital subscriber line circuit 106 informs the terminating terminal of the receipt of packet call via the D channel (210). If the packet call is acceptable, the subscriber unit 101 at the terminating terminal returns the response back to the digital subscriber line circuit 106 (211) through the D channel. At this moment, the packet call that is received is transmitted using either one of the two B channels or using the user's packet of the D channel. Upon receipt of this response, the digital subscriber line circuit 106 returns the response (212) for the connecting request (209) to the circuit switch controller 120, and the controller 120 returns the response (213) for the connection request (208) to the circuit switch controller 120. The packet switch controller 121 returns to the calling subscriber unit 101 a response (214) for the connection request (207) to indicate that the connection is made to the terminating terminal, and assumes the speech (communication) condition of the packet switch. During the speech, user's packets (215), (216) and the like are packet-switched by the packet switch module 105 and are reciprocated. Similar connections are stretched among a plurality of terminals in the same manner as above via the module 105, and the packets are often exchanged among the terminals.

As the give and take of a series of packets are completed, the originating subscriber unit 101 sends a clearback request (217) to the digital subscriber line circuit 106 via the D channel, and the circuit switch controller 120 opens (219 -221) the time slots used therefor, the subscriber line circuit 106, and the subscriber unit 101, and the subscriber unit 101 of the terminating side also opens (222) the B channel or the D channel to complete the call.

In the foregoing are described the circuit switch module and the packet switch module each in one unit in the system. Described below is a method of expanding the capacity of the packet switch in conjunction with Figs. 4 to 7.

Figs. 4A and 4B illustrate the case where there are a small number of terminals that request the packet switch service, wherein Fig. 4A has the same content as that of Fig. 1. That is, there are a circuit switch module 104 and a packet switch module 105, both one unit in the system respectively, that are coupled to the three subscriber line interface modules 103 via speech path highways. The packet switching calls in the switch system is connected to the packet switch module of one unit and is processed. Fig. 4B illustrates another embodiment of the present invention wherein a packet switch module 105' is coupled via a speech path highway to a predetermined subscriber interface module 103-1 only. Here, the connection method is the same as the one explained in conjunction with Fig. 1. The terminal contained in the subscriber line interface module 103-2 that is not directly coupled to the packet switch module is connected to the packet switch module via the circuit switch module 104' and the subscriber interface module that is connected thereto through a packet switch module speech path highway. The connection between the subscriber interface module that is not connected to the packet switch module and the subscriber interface module that is connected to the packet switch module, may be effected in a fixed manner in the form of a packet switch or may be set for each call.

Figs. 5 to 7 illustrate a method of constituting a system of the case when the capacity of packet switch service is increased, and the system requires the packet switch modules of a plurality of units. The packet switch module is connected to the subscriber interface module in the same manner as explained in Fig. 1.

Fig. 5 shows a system in which a plurality of packet switch modules are connected together via a circuit switch module. In this case, the speech path connection for the packet call is as follows:
Terminal -101 -106 (103) -105 -103 -104 -103 -105 -106 (103) -101-terminal

Time slots as many as ones corresponding to the traffic amounts of the packet switch are connected in a fixed manner among the packet switch modules 105 via the circuit switch module 104, the user's packets being transmitted and received in a multiplexed manner over the thus connected path.

Fig. 6 illustrates a system in which the packet switch modules are connected through a bus. In this case, though not diagramed, the hardware and software for bus interface must be added for each packet switch module. Fig. 7 shows the case where the packet switch modules 105 are connected to each other via a burst switch unit (BSU) 130 instead of the bus of Fig. 6. The BSU 103 adds a simple header and a destination address to the packet to sort the packets depending upon their destinations addresses.
Even in this case, an adaptor equipment (burst switching adaptor) 131 must be added to attach a header and an address to each packet switch module or to remove them therefrom.

Fig. 3 illustrates the structure of an integrated switch system that has been widely known. Reference numerals attached to the blocks correspond to those of Fig. 1. In the system shown in Fig. 3, the speech path of a fixed connection is formed between the subscriber interface module 103 and the packet switch module 105 via the circuit switch module 104. The call to request the packet switch service is connected in the subscribe interface module to the speech path of the fixed connection by a method shown in Fig. 1 to offer the packet switch service.

However, this system is defective in that the number of time slots used for the speech path of fixed connection in the CSM increases with the increase in the number of terminals for requesting the packet switch call or increases with the increase in the traffic amount of packet call. These time slots have a low utilization efficiency, and decreases the economical advantage of the switching system as a whole.

In order to compensate this defect, the system was previously proposed as disclosed in Japanese Patent Laid-Open No. 105344/1985 that was mentioned earlier. Even in the above system, however, the amount of cables increases to connect the main distribution frame to the circuit/packet switching parts, lacking flexibility in constituting the system when the terminals are to be transferred or increased and the cable connections are to be changed.

The present invention eliminates these defects.

That is, according to the present invention, the speech path of fixed connection that has a low utilization efficiency connects the terminals to the packet switching unit without passing through the circuit switching unit and, hence, without deteriorating the economical advantage of the system. In this respect, the system of Fig. 4B has no significant difference from the system of Fig. 3. The system of Fig. 4B, however, is superior to the system of Fig. 3 with regard to that it can be expanded as shown in Figs. 5 to 7. In the embodiment of Fig. 5, the speech path of the fixed connection set in the circuit switching unit has a high utilization efficiency since information consisting of packets in the multiplexed form flows between the PSM's. Unlike the case of Fig. 3, therefore, the economical advantage is not lost.

The present invention provides increased degree of flexibility for constituting the system, since the number of time slots for the speech path of fixed connection needs simply be changed between the subscriber interface module and the packet switch module or between the packet switch modules through a circuit switch module in case where the terminals are increased, transferred, or where the traffic amount is changed between the circuit switching and the packet switching.

Moreover, the capacity of the switching system can be increased by simply adding a mutual connection mechanism among the packet switch modules, without changing the connection system between the subscriber interface module and the packet switch module, presenting an advantage in regard to expanding the system.

## Claims

1. In an integrated switching system which performs the circuit switching service and the packet switching service in the same switching system, the improvement wherein a time division switch is provided in a mounted module unit which connects a plurality of subscriber lines or trunk line interface circuits to a first time division highway, and said first time division highway is connected to a circuit switch module via said time division switch and a second time division highway outside the mounted module, and is further connected to a packet switch module via said time division switch and a third time division highway outside the mounted module.

2. An integrated switching system according to claim 1, wherein said time division switch connects parts of the time slots of a first time division highway in the mounted module to a second time division highway outside the mounted module and connects the remaining time slots to a third time division highway outside the mounted module, respectively in a fixed manner, and said time division switch and the subscriber line or the trunk line interface circuit are so controlled that the subscriber line or the speech channel on the trunk line is connected to a time slot that is connected to said second time division highway when the circuit is switched, or is connected to a time slot connected to said third time division highway when the packet is switched.

3. In an integrated switching system according to claim 1, wherein the subscriber line in the mounted module, the trunk line interface circuit and the time division switch are so controlled that, when the circuit switch is requested, the time slots are connected between the first time division highway in the mounted module and the second time division highway outside the mounted module, and that, when the packet switch is requested, the time slots are connected between the first time division highway in the mounted module and the third time division highway outside the mounted module, for every call.

4. An integrated switching system according to claim 1, wherein the time slots of said second and third time division highways are connected through said time division switch, thereby to connect the speech path such that the speech path information consisting of multiplexed packets in the packet switch module is transmitted to a subscriber line or a trunk line or to other packet switch module via a circuit switching unit.

5. An integrated switching system according to claim 1, wherein a plurality of packet switching units exist in a switching sytem, and are connected to the circuit switching unit through the time division switch in the mounted modules corresponding to the packet switching units and through the second and third time division highways, and said plurality of packet switching units are connected together through mutual connection means such as buses.

FIG. 1

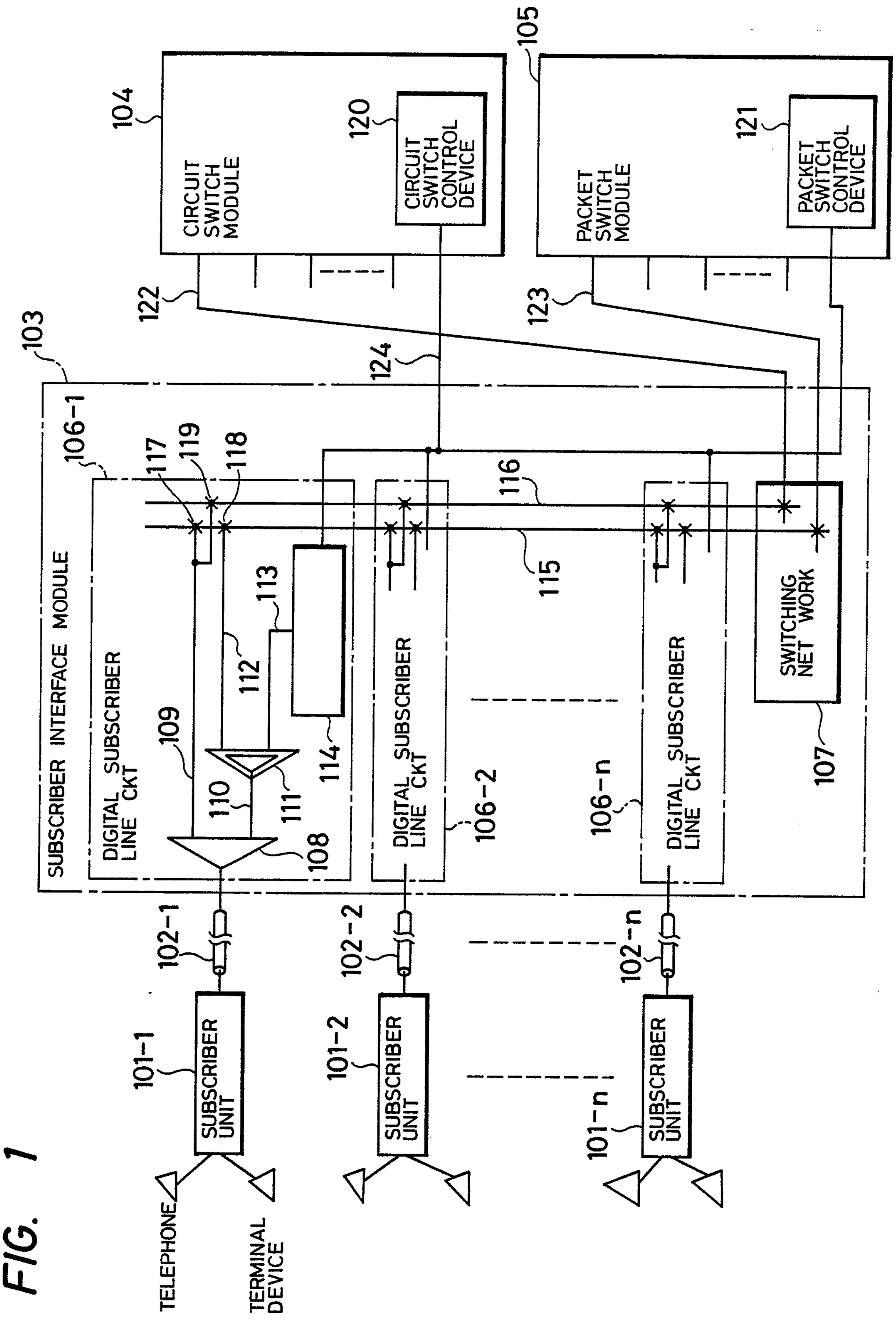

103
SUBSCRIBER INTERFACE MODULE
106-1
DIGITAL SUBSCRIBER LINE CKT
108
109
110
111
112
113
114
115
116
117
118
119
DIGITAL SUBSCRIBER LINE CKT
106-2
106-n
DIGITAL SUBSCRIBER LINE CKT
SWITCHING NET WORK
107
104
CIRCUIT SWITCH MODULE
120
CIRCUIT SWITCH CONTROL DEVICE
105
PACKET SWITCH MODULE
121
PACKET SWITCH CONTROL DEVICE
122
123
124
102-1
102-2
102-n
101-1
SUBSCRIBER UNIT
101-2
SUBSCRIBER UNIT
101-n
SUBSCRIBER UNIT
TELEPHONE
TERMINAL DEVICE

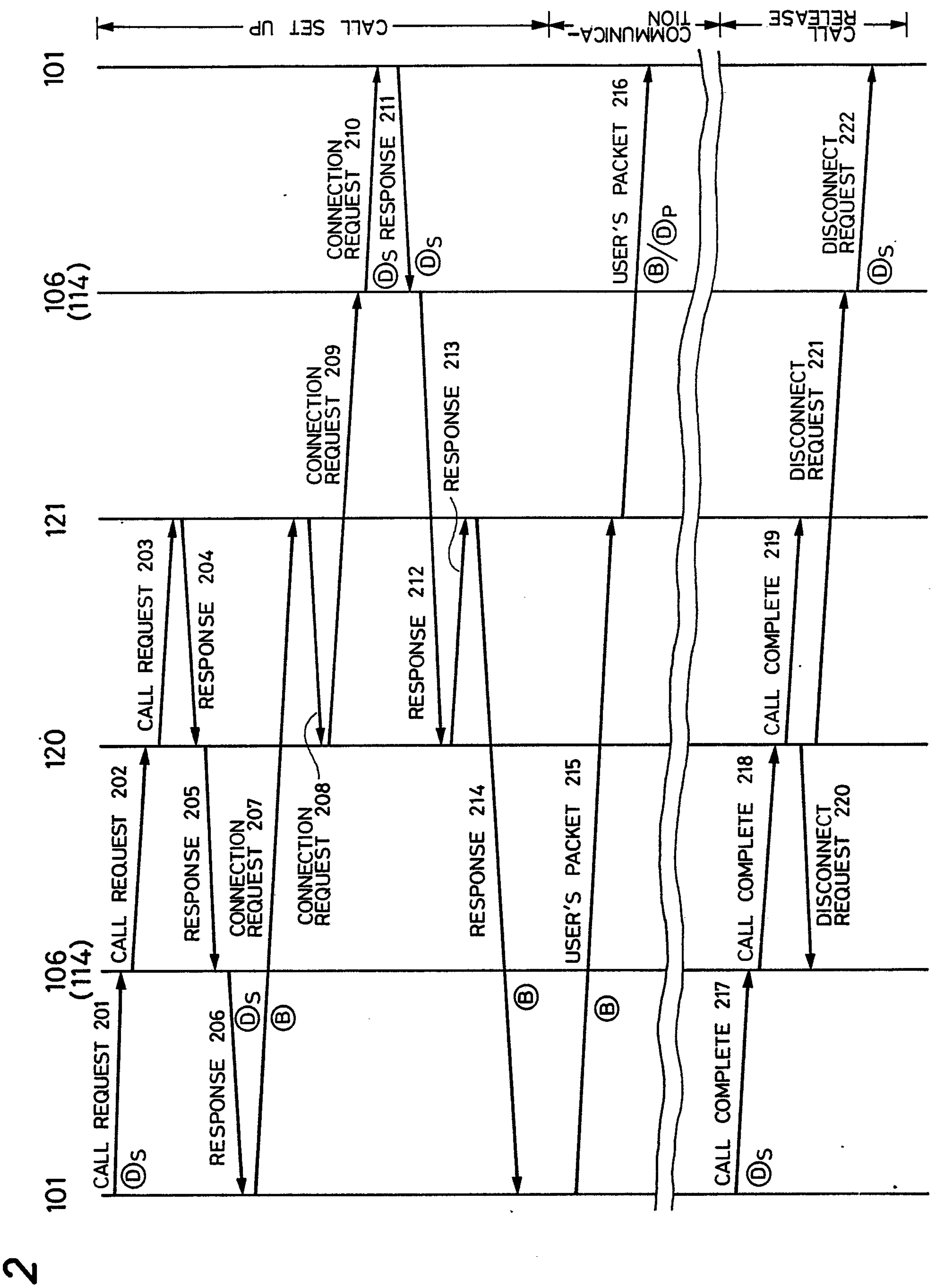

101
106 (114)
121
120
106 (114)
101
CALL SET UP
COMMUNICA-TION
CALL RELEASE
CALL REQUEST 201
Ds
CALL REQUEST 202
CALL REQUEST 203
RESPONSE 204
RESPONSE 205
RESPONSE 206
Ds
B
CONNECTION REQUEST 207
CONNECTION REQUEST 208
CONNECTION REQUEST 209
CONNECTION REQUEST 210
Ds RESPONSE 211
Ds
RESPONSE 212
RESPONSE 213
RESPONSE 214
B
USER'S PACKET 215
B
USER'S PACKET 216
B/Dp
CALL COMPLETE 217
Ds
CALL COMPLETE 218
CALL COMPLETE 219
DISCONNECT REQUEST 220
DISCONNECT REQUEST 221
DISCONNECT REQUEST 222
Ds


FIG. 2

FIG. 3 PRIOR ART

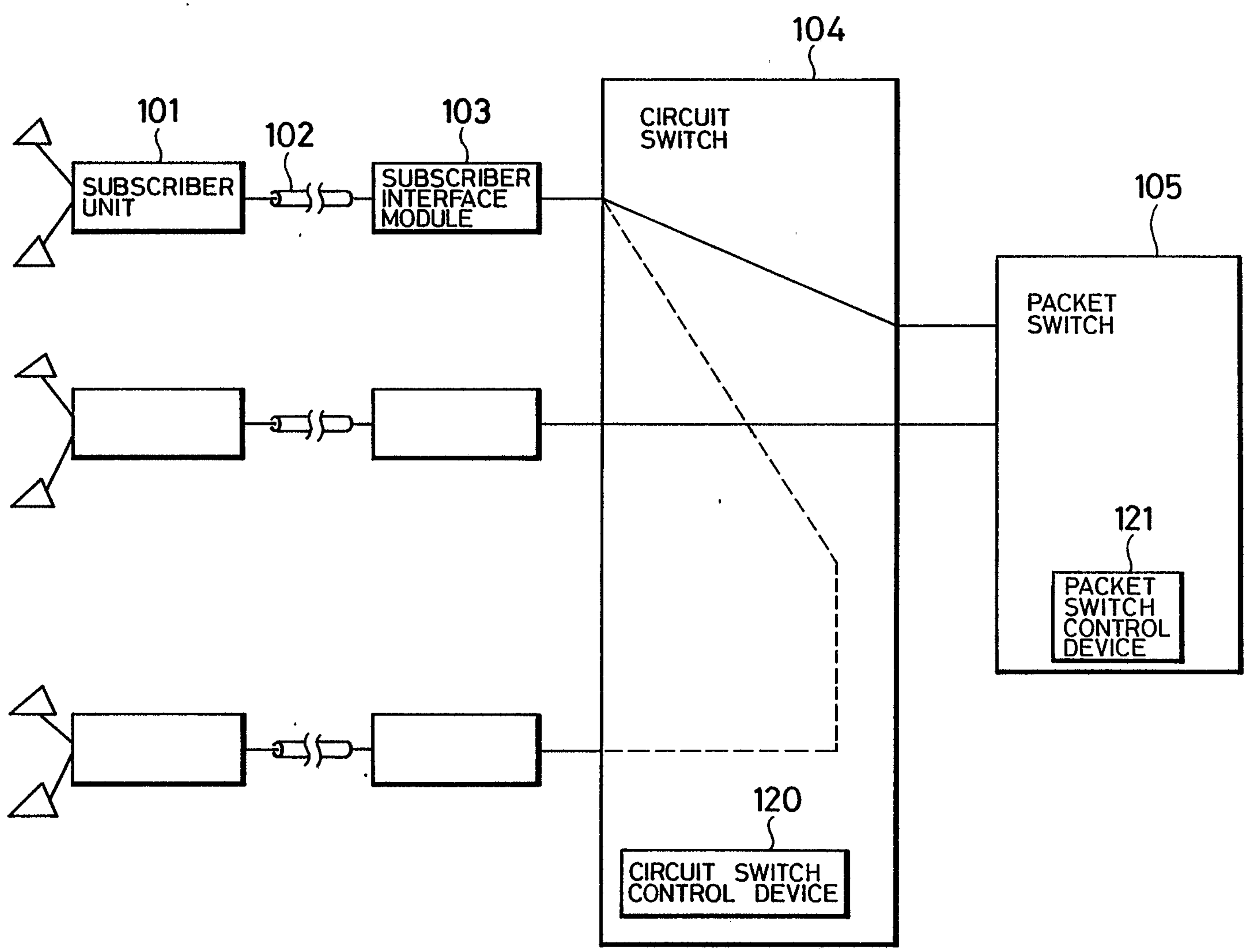

FIG. 4A

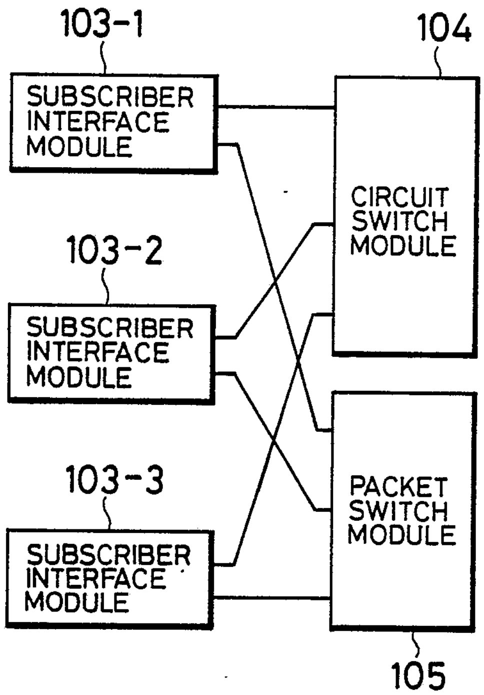


FIG. 4B

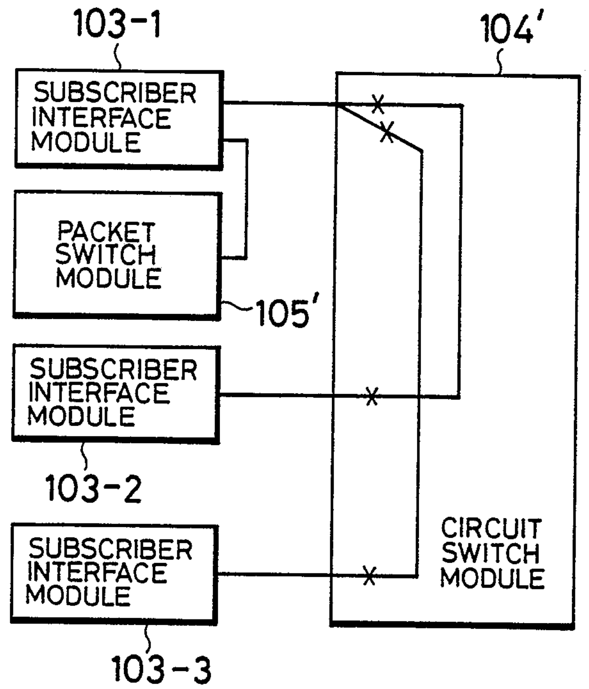


FIG. 5

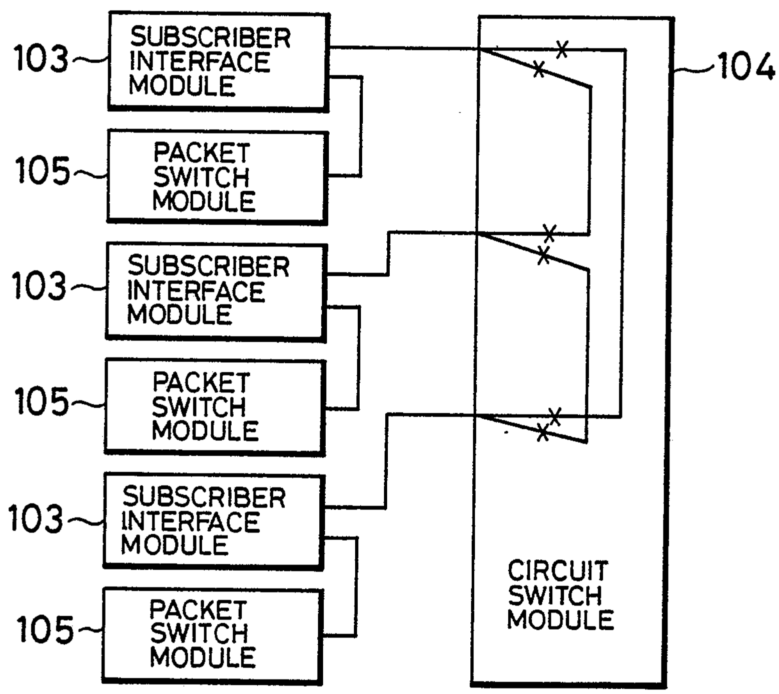

FIG. 6

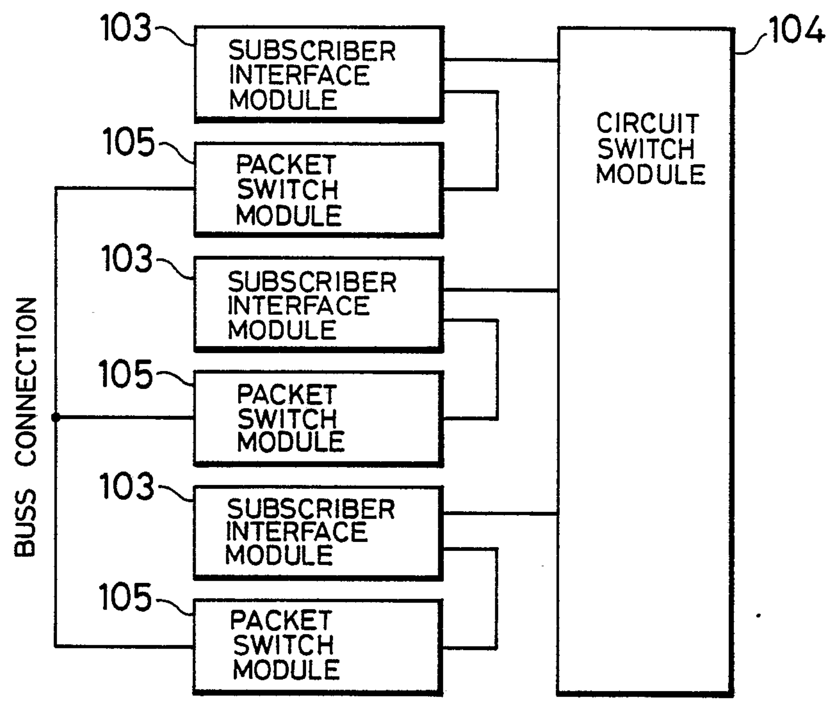
103
SUBSCRIBER INTERFACE MODULE
105
PACKET SWITCH MODULE
103
SUBSCRIBER INTERFACE MODULE
105
PACKET SWITCH MODULE
103
SUBSCRIBER INTERFACE MODULE
105
PACKET SWITCH MODULE
BUSS CONNECTION
104
CIRCUIT SWITCH MODULE

FIG. 7

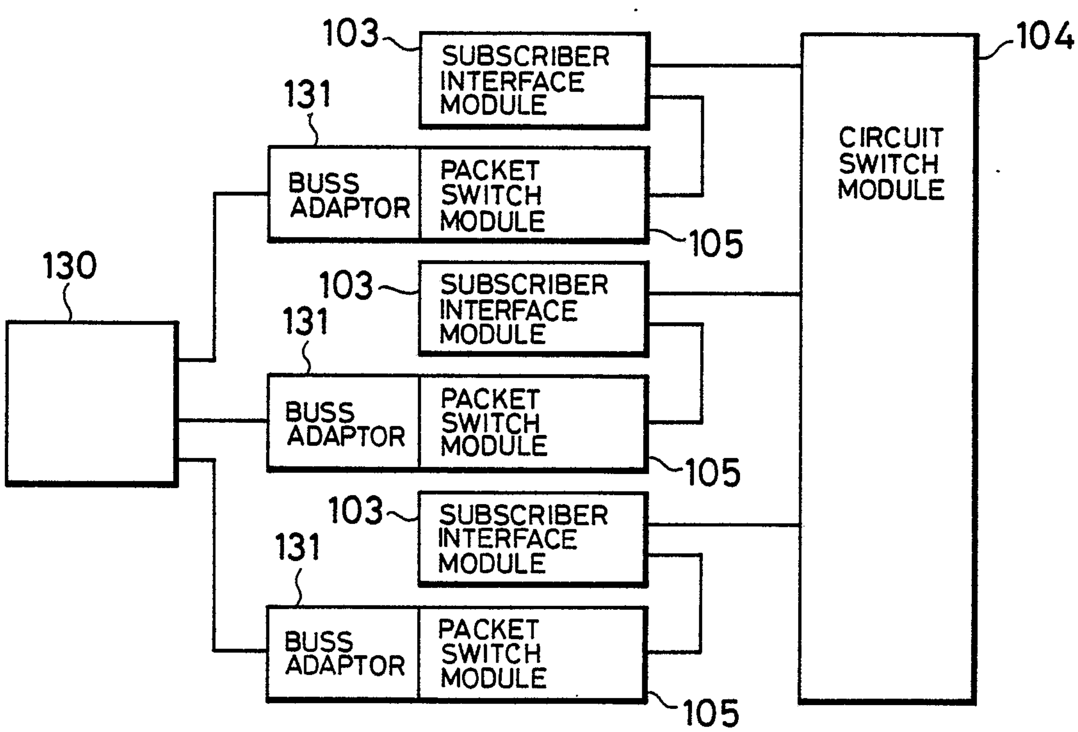
103
SUBSCRIBER INTERFACE MODULE
131
BUSS ADAPTOR
PACKET SWITCH MODULE
105
130
103
SUBSCRIBER INTERFACE MODULE
131
BUSS ADAPTOR
PACKET SWITCH MODULE
105
103
SUBSCRIBER INTERFACE MODULE
131
BUSS ADAPTOR
PACKET SWITCH MODULE
105
104
CIRCUIT SWITCH MODULE